(19) Europäisches Patentamt
European Patent Office
Office européen des brevets

(11) **EP 4 431 476 A1**

(12) **EUROPEAN PATENT APPLICATION**
published in accordance with Art. 153(4) EPC

(43) Date of publication:
**18.09.2024 Bulletin 2024/38**

(51) International Patent Classification (IPC):
*C03C 3/118* (2006.01)     *C03C 13/00* (2006.01)
*C03C 6/06* (2006.01)

(21) Application number: **22891544.3**

(86) International application number:
**PCT/CN2022/111308**

(22) Date of filing: **10.08.2022**

(87) International publication number:
**WO 2023/082736 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.11.2021  CN 202111323970**

(71) Applicants:
• **Taishan Fiberglass Inc.**
**Taian, Shandong 271000 (CN)**
• **China National Building Material Group Co., Ltd.**
**Beijing 100036 (CN)**
(72) Inventors:
• **TANG, Zhiyao**
**Taian, Shandong 271000 (CN)**
• **LI, Yongyan**
**Taian, Shandong 271000 (CN)**
• **WANG, Jiafang**
**Taian, Shandong 271000 (CN)**
• **ZHANG, Yanping**
**Taian, Shandong 271000 (CN)**

(74) Representative: **Casalonga**
**Casalonga & Partners**
**Bayerstraße 71/73**
**80335 München (DE)**

(54) **GLASS FIBER COMPOSITION WITH LOW DIELECTRIC LOSS**

(57) The disclosure belongs to the technical field of glass fibers, and specifically relates to a glass fiber composition with low dielectric loss. The content of each component of the composition is as follows: 50-60% of $SiO_2$; 20-30% of $B_2O_3$; 8-18% of $Al_2O_3$; 1-6% of CaO; 0.2-1.50% of $F_2$; 0.05-0.5% of $SnO_2$; 0.05-0.5% of $Li_2O$; and $K_2O+Na_2O \leq 0.05\%$. In the disclosure, $SnO_2$ and $F_2$ are both added, and the ratio of $F_2/SnO_2$ is controlled, such that not only glass fibers have relatively low dielectric constant and dielectric loss, but also the viscosity of the glass fibers is reduced, so that the number of bubbles in the glass fibers is zero. According to the disclosure, various components interact with one another, such that the glass fiber composition obtained has the low dielectric constant, low dielectric loss, few bubbles, low viscosity, and excellent glass performance.

EP 4 431 476 A1

**Description**

**Technical Field**

The disclosure belongs to the technical field of glass fibers, and specifically relates to a glass fiber composition with low dielectric loss.

**Background**

With the development of 5th Generation Mobile Communication Technology (5G), performance requirements for low dielectric materials are more stringent. The greatest advantage of 5G is a fast propagation speed, and the greatest disadvantage brought thereby is the poor penetrating power and large attenuation. Glass converts partial electrical energy into heat energy in high-frequency electromagnetic fields, thus loss is produced. This requires materials of propagation media to have the characteristics of low dielectric constant and low dielectric loss. In this way, it may be achieved that the signal transmission is faster, the signal delay is lower, and the signal fidelity is higher.

Chinese patent application CN102503153A disclosed a low dielectric constant glass fiber, including: 48wt%~58wt% of $SiO_2$; 10wt%~18wt% of $Al_2O_3$; 18wt%~28wt% of $B_2O_3$; 0~6wt% of CaO; 0~6wt% of MgO; 0.5wt%~8wt% of $Y_2O_3$; 0.2wt%-0.6wt% of $CeO_2$; 0~3wt% of $F_2$; 0~1wt% of $Na_2O$, $K_2O$, and $Li_2O$; 0~0.45wt% of $TiO_2$; and 0~0.5wt% $Fe_2O_3$. The glass fiber has a dielectric constant of 4.1~4.5 and a dielectric loss of $6\times10^{-4}$~$9\times10^{-4}$ at a room temperature and a frequency of 1 MHz.

Chinese patent application CN104556710A disclosed a special-shaped glass fiber and a preparation method thereof. The special-shaped glass fiber includes the following components in molar percentage: 52%~58% of $SiO_2$; 16%~24% of $B_2O_3$; 13%~19% of $Al_2O_3$; 1%~5% of CaO; 4.2%~8% of MgO; 0.4%~2% of $F_2$; 0~0.5% of $Li_2O$; 0~0.4% of $Fe_2O_3$; 0~0.2% of $K_2O$; and 0~0.2% of $Na_2O$. The dielectric constant of the special-shaped glass fiber at the room temperature and the frequency of 1 MHz is less than 4.7, and the dielectric loss factor is less than $10^{-3}$.

Chinese patent application CN103482876A disclosed a low dielectric constant glass fiber used for a printed circuit board, including the following components in mass percentage: 48%~53% of $SiO_2$; 13%~16% of $Al_2O_3$; 19%~25% of $B_2O_3$; 0.5%~2% of $P_2O_5$; 5.0%-8.5% of CaO; 0.5%~8% of $La_2O_3$; 0.5%-2.5% of ZnO; 0.5%~2% of $TiO_2$; $Na_2O$, $K_2O$, and $Li_2O$ are less than 1%; $SO_3$ is less than 0.45%; and $Fe_2O_3$ is less than 0.45%. It has the very low dielectric constant and dielectric loss. At the room temperature and the frequency of 1 MHz, the dielectric constant is 4.8-5.5, and the dielectric loss is $4$~$8\times10^{-4}$.

Although the glass fiber in the above patent has the relatively low viscosity, its dielectric properties are detected under 1 MHz conditions and the dielectric loss of the glass is increased with the increased frequency. For example, at the room temperature and 1 MHz, silicate glass $\tan\delta=9\times10^{-4}$, and at 3000 MHz, it is $36\times10^{-4}$. So the above patent only has the relatively low dielectric loss when detected at the room temperature and 1 MHz.

Chinese patent application CN113135666A disclosed a low dielectric glass fiber, including 50~58% of $SiO_2$; 10~16% of $Al_2O_3$; 20~28% of $B_2O_3$; 1~4% of MgO; 1~4% of CaO; 0.05-0.5% of $Li_2O$; 0.05-0.6% of $Na_2O$; 0.05-0.8% of $K_2O$; 0.2-1.5% of $TiO_2$; 0~1% of $CeO_2$; 0.01-1.5% of $SnO_2$; and 0~0.1% of $Fe_2O_3$. By reasonably setting the ratio of silicon oxide, aluminum oxide, and boron oxide, the glass fiber has the relatively low dielectric constant and dielectric loss, and the glass viscosity is adjusted appropriately. The dielectric constant of the glass fiber at the room temperature and a frequency of 10 GHz is 4.2-4.5, and the dielectric loss is $2.5\times10^{-3}$-$4.4\times10^{-3}$. The dielectric constant and dielectric loss in this patent are relatively high.

Based on the above problems, there is an urgent need to develop a glass fiber composition with low dielectric constant, low dielectric loss, low viscosity, and zero bubbles suitable for large-scale production at a high frequency.

**Summary**

A purpose of the disclosure is to provide a glass fiber composition with low dielectric constant, low dielectric loss, low viscosity, and zero bubbles.

The glass fiber composition with low dielectric loss described in the disclosure has the following component contents in mass percentage:

$SiO_2$: 50-60%;

$B_2O_3$: 20-30%;

$Al_2O_3$: 8-18%;

CaO: 1-6%;

$F_2$: 0.2-1.50%;

$SnO_2$: 0.05-0.5%;

$Li_2O$: 0.05-0.5%;

$K_2O+Na_2O \leq 0.05\%$.

Preferably, the glass fiber composition with low dielectric loss has the following component contents in mass percentage:

$SiO_2$: 50-60%;

$B_2O_3$: 20-30%;

$Al_2O_3$: 8-18%;

CaO: 1-6%;

$F_2$: 0.2-1.50%;

$P_2O_5$: 0.05-5%;

$SnO_2$: 0.05-0.5%;

$Li_2O$: 0.05-0.5%;

$K_2O+Na_2O \leq 0.05\%$.

Preferably, the glass fiber composition with low dielectric loss has the following component contents in mass percentage:

$SiO_2$: 50-60%;

$B_2O_3$: 20-30%;

$Al_2O_3$: 8-18%;

CaO: 1-6%;

$F_2$: 0.2-1.50%;

$SnO_2$: 0.05-0.5%;

$Li_2O$: 0.05-0.5%;

$K_2O+Na_2O \leq 0.05\%$;

$0 < MgO < 2.0$.

Preferably, the glass fiber composition with low dielectric loss has the following component contents in mass percentage:

$SiO_2$: 50-60%;

$B_2O_3$: 20-30%;

Al$_2$O$_3$: 8-18%;

CaO: 1-6%;

F$_2$: 0.2-1.50%;

P$_2$O$_5$: 0.05-5%;

SnO$_2$: 0.05-0.5%;

Li$_2$O: 0.05-0.5%;

K$_2$O+Na$_2$O ≤0.05%;

0<MgO<2.0.

Herein:

The mass percentage content of SnO$_2$ and Li$_2$O satisfies a range of 0.2-3 for SnO$_2$/Li$_2$O.

The mass percentage content of F$_2$ and SnO$_2$ satisfies a range of 1-5 for F$_2$/SnO$_2$.

The mass percentage content of P$_2$O$_5$, F$_2$, and SnO$_2$ satisfies a range of 2-5 for P$_2$O$_5$/(F$_2$+SnO$_2$).

Raw materials for preparing the glass fiber composition of the disclosure are quartz powder, boron anhydride, aluminum oxide, wollastonite, magnesium oxide, tin oxide, fluorite, aluminum metaphosphate, and spodumene.

The beneficial effects of the disclosure are as follows.

SiO$_2$ forms an irregular continuous network structure by a structure of silica tetrahedron, this structure has the relatively high bond strength, and the structure is compact. It is not easily polarized under the action of an external electric field, and it does not easily produce losses such as conduction and relaxation. Therefore, the high content of SiO$_2$ may significantly reduce the dielectric constant and dielectric loss of glass, and enhance the mechanical strength. However, the increased content may increase the viscosity and increase the difficulty of melting. For example, quartz glass has a very low dielectric loss of 0.0001, but its viscosity is high, and it is difficult to melt. The disclosure limits the SiO$_2$ content range to 50% -60%.

In B$_2$O$_3$, boron exists as a boron-oxygen triangle at the high temperature, the viscosity may be reduced. However, when the boron content reaches a certain value, it may actually increase the viscosity. Therefore, the boron content should not be too high, and it is not beneficial to production. Moreover, the B$_2$O$_3$ content is too high, a SiO$_2$ grid is easily precipitated, and the phase separation is generated. In addition, the addition of B$_2$O$_3$ introduces B$^{3+}$ to form B-O, and the bond energy of this bond is larger than that of Si-O. It may play a role of stabilizing the glass network structure and limiting the polarization of oxygen ions in the glass. Therefore, the addition of B$_2$O$_3$ may reduce the dielectric constant and dielectric loss. The disclosure limits the B$_2$O$_3$ content range to 20% -30%.

The addition of Al$_2$O$_3$ may effectively inhibit the crystallization of the glass. In multi-component glass, Al$_2$O$_3$ may play a role in connecting the fracture network, so that the network structure is compact, and the glass strength is improved. However, the Al-O bond energy is weaker than the Si-O bond energy, so that free oxygen is increased, and thus the loss is increased. The disclosure limits the Al$_2$O$_3$ content range to 8%-18%.

CaO belongs to an outer body of the network, the coordination number of calcium ions is 6 generally, and it has little activity in the structure and is generally not easy to precipitate from the glass. It has the greater activity at the high temperature. Ca$^{2+}$ has the function of polarizing bridge oxygen and weakening silicon-oxygen bonds, this makes it have the function of reducing the viscosity and shortening material properties. At the same time, the loss caused by the free oxygen may be increased. The disclosure limits the CaO content range to 1%-6%.

The disclosure may also add MgO on the basis of adding SnO$_2$ and F$_2$. MgO may reduce the viscosity of the glass in the glass system, but the content is too high, the dielectric constant and dielectric loss may be increased. The disclosure limits the MgO content range to MgO<2.0.

P$_2$O$_5$ always exists in the glass structure in the form of phosphorus-oxygen tetrahedron, and is a glass forming body. It may serve as a skeleton of the glass, to improve the phase separation temperature of the glass, enhance the temperature resistance of the glass, and also shorten the material properties of the glass. In technical researches, a differential scanning calorimetry (DSC) is used to detect the expansion and softening point temperature of the glass, and it is found that after P is introduced, the softening point temperature of the glass is raised compared to before the introduction of P, and it is beneficial to improve the temperature resistance of subsequent products. In addition, the single P$_2$O$_5$ raw material is prone to moisture absorption and agglomeration in the blending process, so that the uniformity of blended materials is poor, and the requirements for storage conditions are high. The disclosure introduces P$_2$O$_5$ by

an aluminum metaphosphate or condensed aluminum phosphate raw material, so that $P_2O_5$ is dispersed uniformly in the blended material. The melting speed of $B_2O_3$ is fast in the melting process of the blended material, and it is partially wrapped by $P_2O_5$ distributed uniformly, thus the volatile quantity is reduced, and the gas emission is reduced. However, the excessive introduction leads to a significant increase in low-temperature viscosity, and the high content of P may easily compete with B for the free oxygen, the glass devitrification is caused, and the crystallization is generated. It is found from the disclosure that when the $Al_2O_3$ content is >8, it may effectively inhibit the phase separation caused by the introduction of high B and P. By controlling the ratio of $Al_2O_3$, $P_2O_5$, and $B_2O_3$, the forming temperature of the glass is reduced, and the crystallization is inhibited. The disclosure controls the $P_2O_5$ content range to 0.05% -5%.

As alkali metal oxides such as $Li_2O$, $K_2O$, and $Na_2O$, the viscosity characteristics of the glass may be decreased rapidly, and it is beneficial for glass melting and clarification. However, bonds formed by the alkali metals and oxygen are easily polarized, so that the dielectric loss is significantly increased. The disclosure adds a small amount of $Li_2O$ to reduce the viscosity under the premise of guaranteeing the dielectric loss, and it is beneficial for the glass melting. The disclosure strictly controls the content of $K_2O$ and $Na_2O$ in the raw material, and a small amount of which is introduced as impurities in the raw material without adding. The disclosure limits the range of $Li_2O$ to 0.05-0.5%, and $K_2O+Na_2O$ ≤0.05%, so it is guaranteed that glass with low dielectric loss is obtained at a relatively low melting temperature.

$SnO_2$ is decomposed at the high temperature to generate $O_2$, the gas partial pressure is reduced, and it is beneficial to the discharge of bubbles. More importantly, $SnO_2+Li_2O$ of the disclosure acts as a composite clarifier, which is interfered by an $Sn^{4+}$ external electronic layer, so that the polarization effect of $Li^+$ is enhanced, and the beneficial effects of $Li_2O$ are effectively improved. In the glass clarification process, the surface tension of glass liquid is reduced, the bubbles are efficiently discharged, and the uniformity of the glass is improved, as to achieve the zero bubble rate required for the low dielectric glass fiber production. In addition, the melting temperature of the blended material is greatly reduced, thereby the volatilization of B and F is reduced. The disclosure controls the $SnO_2$ content range to 0.05-0.5%, and the range of the weight percentage ratio of $SnO/Li_2O$ is 0.2-3.

F atoms have a small radius and are not easily polarized compared to O atoms. It forms a Si-F bond with Si, partially replacing Si-O, and plays a network breaking role in the glass network. In addition, the bond strengths of Si-F, B-F, and Al-F formed in the glass is stronger than those of Si-O, B-O, and Al-O bonds. This dual effect may reduce the melting temperature, viscosity, and surface tension of the glass, and it is beneficial for reducing the difficulty of a glass forming process. In addition, the formed Si-F bond is not easily polarized, and the dielectric loss is reduced. The disclosure controls the $F_2$ content range to 0.2% -1.5%.

In addition, the content ratio of $F_2$ to $SnO_2$ in the disclosure has a significant impact on the dielectric loss of the glass. When a small amount of $SnO_2$ is introduced, the two are cooperated with each other, so that the reduction in dielectric loss is more apparent. When the range of the weight percentage ratio of $F_2/SnO_2$ in the disclosure is 1-5, the effect is apparent. It is indicated from experiments that the purpose of the disclosure may not be achieved when $F_2$ or $SnO_2$ is added alone or the range of $F_2/SnO_2$ is not 1-5. When $F_2$ and $SnO_2$ are used together, $F_2$ is dispersed around $SnO_2$, to forming the Sn-F bond that works together with Si-F, B-F, and Al-F to further reduce the melting temperature, viscosity, and surface tension of the glass.

In conclusion, the disclosure simultaneously adds $SnO_2$ and $F_2$, and controls the ratio of $F_2/SnO_2$, which not only makes the glass fiber have the relatively low dielectric constant and dielectric loss, but also reduces the viscosity of the glass fiber, so that the number of the bubbles in the glass fiber is zero.

In addition, the disclosure may also add $P_2O_5$ on the basis of adding $SnO_2$ and $F_2$, and control the ratio range of $P_2O_5/(F_2+SnO_2)$ to 2-5, thus the dielectric constant and dielectric loss of the glass fibers are further reduced.

The various components of the disclosure are interacted, so that the glass fiber composition obtained has the low dielectric constant and low dielectric loss, few bubbles, low viscosity, and excellent glass performance.

## Detailed Description of the Embodiments

The disclosure is further described below in combination with embodiments.

Embodiments 1-7

Components of the glass fiber composition with low dielectric loss in Embodiments 1-7 are shown in Table 1.

(1) According to the content of each component, each compound is mixed in a certain ratio, and after being mixed uniformly, a blended material is placed in a platinum crucible, then it is melted at 1550-1600°C, and it is wire-drawn at less than 1350 °C to prepare a glass fiber.

In order to guarantee that glass has the sufficient strength and adapts to a wire-drawing process, modulus strength detection is performed: the glass is cut into glass blocks of 20*20*15 mm (length * width * thickness), the testing surface is smooth and flat. An ultrasonic thickness gauge is used, the unit of the actual sound velocity measured by the thickness gauge is mm/us, so the sound velocity value (cm/s) in the following formula is: measured value $* 10^5$, density unit: $g/cm^3$, and required data may be calculated by substituting it.

$$(1) \text{ Poisson ratio (v)} = \frac{1-2(V_T/V_L)^2}{2-2(V_T/V_L)^2}$$

Herein, $V_T$=transverse wave velocity (cm/s), $V_L$=longitudinal wave velocity (cm/s).

$$(2) \text{ Young modulus }（E）= \frac{V_L{}^2\rho(1+v)(1-2v)}{1-v}$$

Herein, $V_L$=longitudinal wave velocity (cm/s), $\rho$=density ($g/cm^3$), v=poisson ratio.

(2) Dielectric performance detection: the blended material mixed uniformly is placed and melted in the platinum crucible, a sample melted is annealed at 600 °C to eliminate stress, and then it is cut into the sample of $\Phi50*2$ mm, and tested at 10 GHz by using a network vector analyzer.

Data of various indicators such as lg3.0 temperature, liquid phase temperature, $\triangle$T, dielectric constant, dielectric loss, modulus, and bubble number of the glass fiber composition are shown in Table 1.

Contrast examples 1-6

Components of the glass fiber composition in Contrast examples 1-6 are shown in Table 2.

Data of various indicators such as lg3.0 temperature, liquid phase temperature, $\triangle$T, dielectric constant, dielectric loss, modulus, and bubble number of the glass fiber composition are shown in Table 2.

Table 1: Data table for Embodiments 1-7

| | Content range | Embod iment 1 | Embod iment 2 | Embod iment 3 | Embod iment 4 | Embod iment 5 | Embod iment 6 | Embo diment 7 |
|---|---|---|---|---|---|---|---|---|
| $SiO_2$ | 50-60 | 55 | 60 | 50 | 56.43 | 57 | 56.44 | 53 |
| $B_2O_3$ | 20-30 | 22.5 | 20.8 | 27.77 | 24 | 21.5 | 25.5 | 24 |
| $Al_2O_3$ | 8.0-18 | 13.87 | 13.83 | 12 | 13 | 11.85 | 13 | 16 |
| CaO | 1.0-6.0 | 3.5 | 2.1 | 5 | 4.1 | 5 | 4.1 | 4 |
| MgO | <2.0 | 0 | 0 | 0 | 0 | 1 | 0 | 1.22 |
| $P_2O_5$ | 0.05-5.0 | 4 | 2 | 4.1 | 1.5 | 2.5 | 0 | 0 |
| $F_2$ | 0.2-1.5 | 0.8 | 0.6 | 0.6 | 0.4 | 0.8 | 0.4 | 1.2 |
| $SnO_2$ | 0.05-0.5 | 0.2 | 0.35 | 0.3 | 0.15 | 0.2 | 0.15 | 0.25 |
| $Li_2O$ | 0.05-0.5 | 0.1 | 0.3 | 0.2 | 0.4 | 0.15 | 0.4 | 0.3 |
| $K_2O+Na_2O$ | ≤0.05 | 0.03 | 0.02 | 0.03 | 0.02 | 0 | 0.01 | 0.03 |
| $F_2/SnO_2$ | 1.0-5.0 | 4.00 | 1.71 | 2.00 | 2.67 | 4.00 | 2.67 | 4.80 |
| $P_2O_5$ $(F_2+SnO_2)$ | 2-5 | 4.00 | 2.11 | 4.56 | 2.73 | 2.50 | 0.00 | 0.00 |
| $SnO_2/Li_2O$ | 0.2-3 | 2.00 | 1.17 | 1.50 | 0.38 | 1.33 | 0.38 | 0.83 |
| lg3.0/°C | | 1310 | 1335 | 1320 | 1316 | 1308 | 1305 | 1300 |
| Liquid phase temperature/ °C | | 1050 | 1123 | 1060 | 1080 | 1023 | 998 | 1010 |

(continued)

|  | Content range | Embod iment 1 | Embod iment 2 | Embod iment 3 | Embod iment 4 | Embod iment 5 | Embod iment 6 | Embo diment 7 |
|---|---|---|---|---|---|---|---|---|
| $\Delta T$/ °C |  | 260 | 212 | 260 | 236 | 285 | 307 | 290 |
| Dielectric constant 10 GHz |  | 4.1 | 4.07 | 4.15 | 4.12 | 4.15 | 4.18 | 4.16 |
| Dielectric loss 10 GHz |  | 0.0015 | 0.0013 | 0.0013 | 0.0016 | 0.0016 | 0.0018 | 0.0017 |
| Modulus /GPa |  | 60 | 65 | 60 | 60 | 62 | 59 | 63 |
| Bubble number (bubbles/10 g) |  | 0 | 0 | 0 | 0 | 0 | 0 | 0 |

Table 2: Data table for Contrast examples 1-6

|  | Contrast example 1 | Contrast example 2 | Contrast example 3 | Contrast example 4 | Contrast example 5 | Contrast example 6 |
|---|---|---|---|---|---|---|
| $SiO_2$ | 55 | 55 | 60 | 60 | 55 | 55 |
| $B_2O_3$ | 22.2 | 22.5 | 20.8 | 20.8 | 22.5 | 22.5 |
| $Al_2O_3$ | 13.87 | 14.07 | 14.08 | 14.33 | 14.67 | 14.87 |
| CaO | 3.5 | 3.5 | 2.1 | 2.1 | 3.5 | 3.5 |
| MgO | 0 | 0 | 0 | 0 | 0 | 0 |
| $P_2O_5$ | 4 | 4 | 2 | 1.5 | 4 | 4 |
| $F_2$ | 0.8 | 0.8 | 0.6 | 0.6 | 0 | 0 |
| $SnO_2$ | 0.5 | 0 | 0.1 | 0.35 | 0.2 | 0 |
| $Li_2O$ | 0.1 | 0.1 | 0.3 | 0.3 | 0.1 | 0.1 |
| $K_2O+Na_2O$ | 0.03 | 0.03 | 0.02 | 0.02 | 0.03 | 0.03 |
| $F_2/SnO_2$ | 1.60 | 0.00 | 6.00 | 1.71 | 0 | 0 |
| $P_2O_5/(F_2+SnO_2)$ | 3.08 | 5.00 | 2.86 | 1.58 | 20 | 0 |
| $SnO_2/Li_2O$ | 5.00 | 0.00 | 0.33 | 1.17 | 2 | 0 |
| lg3.0/ °C | 1360 | 1375 | 1365 | 1392 | 1384 | 1398 |
| Liquid phase temperature / °C | 1079 | 1100 | 1110 | 1200 | 1153 | 1164 |
| $\Delta T$/ °C | 281 | 275 | 255 | 192 | 231 | 234 |
| Dielectric constant 10 GHz | 4.55 | 4.52 | 4.55 | 4.58 | 4.59 | 4.65 |
| Dielectric loss 10 GHz | 0.0035 | 0.0033 | 0.0028 | 0.0030 | 0.0029 | 0.0031 |
| Modulus /GPa | 54 | 55 | 58 | 60 | 52 | 51 |
| Bubble number (bubbles/10 g) | 10 | 22 | 25 | 12 | 20 | 30 |

In the table, lg3.0 refers to the temperature at which the viscosity of glass liquid is 1000 poises, which is the forming temperature of the glass, namely the wire-drawing temperature; the liquid phase temperature refers to an upper limit of the crystallization temperature or phase separation temperature, which is the upper limit of the glass devitrification temperature; and the difference between the forming temperature and the liquid phase temperature is larger, it is more beneficial for wire-drawing.

The data in Tables 1-2 are analyzed, the ratio of $SnO_2/Li_2O$ in Contrast example 1 is 5.00, which is not within the range of 0.2-3; the ratio of $F_2/SnO_2$ in Contrast example 3 is 6.00, which is not within the range of 1-5; and the ratio of $P_2O_5/(F_2+SnO_2)$ in Contrast example 4 is 1.58, which is not within the range of 2-5. This leads to an increase in viscosity of the glass fiber, and the number of the bubbles in the glass fiber is also increased to varying degrees.

By comparing Embodiment 1 with Contrast examples 2, 5, and 6, it may be seen that compared to Embodiment 1 of the disclosure, $SnO_2$ is not added in Contrast example 2, $F_2$ is not added in Contrast example 5, and $SnO_2$ and $F_2$ are not added in Contrast example 6, which all lead to the increase in viscosity of the glass fiber, so that the number of the bubbles in the glass fiber is increased. The disclosure simultaneously adds $SnO_2$ and $F_2$, and controls the ratio of $F_2/SnO_2$, which not only makes the glass fiber have the relatively low dielectric constant and dielectric loss, but also reduces the viscosity of the glass fiber, so that the number of the bubbles in the glass fiber is zero. In addition, the disclosure may also add $P_2O_5$, and control the ratio range of $P_2O_5/(F_2+SnO_2)$ to 2-5, thus the dielectric constant and dielectric loss of the glass fibers are further reduced.

## Claims

1. A glass fiber composition with low dielectric loss, wherein calculated by mass percentage, the content of each component is as follows:

   $SiO_2$: 50-60%;
   $B_2O_3$: 20-30%;
   $Al_2O_3$: 8-18%;
   CaO: 1-6%;
   $F_2$: 0.2-1.50%;
   $SnO_2$: 0.05-0.5%;
   $Li_2O$: 0.05-0.5%;
   $K_2O+Na_2O \leq 0.05\%$;
   the mass percentage content of $SnO_2$ and $Li_2O$ satisfies a range of 0.2-3 for $SnO_2/Li_2O$; and
   the mass percentage content of $F_2$ and $SnO_2$ satisfies a range of 1-5 for $F_2/SnO_2$.

2. A glass fiber composition with low dielectric loss, wherein calculated by mass percentage, the content of each component is as follows:

   $SiO_2$: 50-60%;
   $B_2O_3$: 20-30%;
   $Al_2O_3$: 8-18%;
   CaO: 1-6%;
   $F_2$: 0.2-1.50%;
   $P_2O_5$: 0.05-5%;
   $SnO_2$: 0.05-0.5%;
   $Li_2O$: 0.05-0.5%;
   $K_2O+Na_2O \leq 0.05\%$;
   the mass percentage content of $SnO_2$ and $Li_2O$ satisfies a range of 0.2-3 for $SnO_2/Li_2O$;
   the mass percentage content of $F_2$ and $SnO_2$ satisfies a range of 1-5 for $F_2/SnO_2$; and
   the mass percentage content of $P_2O_5$, $F_2$, and $SnO_2$ satisfies a range of 2-5 for $P_2O_5/(F_2+SnO_2)$.

3. A glass fiber composition with low dielectric loss, wherein calculated by mass percentage, the content of each component is as follows:

   $SiO_2$: 50-60%;
   $B_2O_3$: 20-30%;
   $Al_2O_3$: 8-18%;
   CaO: 1-6%;

$F_2$: 0.2-1.50%;
$SnO_2$: 0.05-0.5%;
$Li_2O$: 0.05-0.5%;
$K_2O+Na_2O \leq 0.05\%$;
$0<MgO<2.0$;
the mass percentage content of $SnO_2$ and $Li_2O$ satisfies a range of 0.2-3 for $SnO_2/Li_2O$; and
the mass percentage content of $F_2$ and $SnO_2$ satisfies a range of 1-5 for $F_2/SnO_2$.

4.  A glass fiber composition with low dielectric loss, wherein calculated by mass percentage, the content of each component is as follows:

$SiO_2$: 50-60%;
$B_2O_3$: 20-30%;
$Al_2O_3$: 8-18%;
$CaO$: 1-6%;
$F_2$: 0.2-1.50%;
$P_2O_5$: 0.05-5%;
$SnO_2$: 0.05-0.5%;
$Li_2O$: 0.05-0.5%;
$K_2O+Na_2O \leq 0.05\%$;
$0<MgO<2.0$;
the mass percentage content of $SnO_2$ and $Li_2O$ satisfies a range of 0.2-3 for $SnO_2/Li_2O$;
the mass percentage content of $F_2$ and $SnO_2$ satisfies a range of 1-5 for $F_2/SnO_2$; and
the mass percentage content of $P_2O_5$, $F_2$, and $SnO_2$ satisfies a range of 2-5 for $P_2O_5/(F_2+SnO_2)$.

## INTERNATIONAL SEARCH REPORT

| International application No. |
| --- |
| **PCT/CN2022/111308** |

**A. CLASSIFICATION OF SUBJECT MATTER**

C03C 3/118(2006.01)i; C03C 13/00(2006.01)i; C03C 6/06(2006.01)i

According to International Patent Classification (IPC) or to both national classification and IPC

**B. FIELDS SEARCHED**

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

CNABS; VEN; CNTXT; ENTXT; CNKI; ISI: 玻璃, 纤维, 介电损耗, 氟, 氟化物, 萤石, 氧化锡, 氧化磷, 氧化硅, 氧化铝, 氧化硼, 氧化锂, glass, fiber, dielectric loss, fluorin, fluoride, fluorite, tin oxide, phosphorus pentoxide, silicon oxide, alumina, boron oxide, lithium oxide, SnO2, P2O5, SiO2, Al2O3, Li2O

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113880441 A (TAISHAN FIBERGLASS INC.) 04 January 2022 (2022-01-04) claims 1-7 | 1-4 |
| A | CN 110719897 A (NITTO BOSEKI CO., LTD.) 21 January 2020 (2020-01-21) claim 1, and description, paragraphs [0025]-[0028], [0052], and [0060]-[0061] | 1-4 |
| A | US 2020181004 A1 (AGY HOLDING CORP.) 11 June 2020 (2020-06-11) description, paragraphs [0002]-[0004], [0007], [0027], and [0054]-[0090], and tables 1-10 | 1-4 |
| A | CN 104909578 A (CHONGQING POLYCOMP INTERNATIONAL CORPORATION) 16 September 2015 (2015-09-16) description, paragraphs [0028] and [0031]-[0046] | 1-4 |
| A | CN 110770182 A (NIPPON SHEET GLASS CO., LTD. et al.) 07 February 2020 (2020-02-07) entire document | 1-4 |
| A | CN 112047626 A (FULLTECH FIBER GLASS CORP.) 08 December 2020 (2020-12-08) entire document | 1-4 |
| A | CN 103351102 A (JUSHI GROUP CO., LTD.) 16 October 2013 (2013-10-16) entire document | 1-4 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 October 2022** | **26 October 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/111308** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 101594987 A (AGY HOLDING CORP. et al.) 02 December 2009 (2009-12-02)<br>entire document | 1-4 |

Form PCT/ISA/210 (second sheet) (January 2015)

**INTERNATIONAL SEARCH REPORT**
**Information on patent family members**

International application No.

**PCT/CN2022/111308**

| Patent document cited in search report | | | Publication date (day/month/year) | Patent family member(s) | | | Publication date (day/month/year) |
|---|---|---|---|---|---|---|---|
| CN | 113880441 | A | 04 January 2022 | None | | | |
| CN | 110719897 | A | 21 January 2020 | EP | 3617164 | A1 | 04 March 2020 |
| | | | | WO | 2019049526 | A1 | 14 March 2019 |
| | | | | TW | 201920035 | A | 01 June 2019 |
| | | | | KR | 20190133058 | A | 29 November 2019 |
| | | | | US | 2020199015 | A1 | 25 June 2020 |
| US | 2020181004 | A1 | 11 June 2020 | None | | | |
| CN | 104909578 | A | 16 September 2015 | None | | | |
| CN | 110770182 | A | 07 February 2020 | TW | 201908260 | A | 01 March 2019 |
| | | | | KR | 20200010474 | A | 30 January 2020 |
| | | | | EP | 3632863 | A1 | 08 April 2020 |
| | | | | JP | WO2018216637 | A1 | 07 November 2019 |
| | | | | WO | 2018216637 | A1 | 29 November 2018 |
| | | | | US | 2020087196 | A1 | 19 March 2020 |
| CN | 112047626 | A | 08 December 2020 | US | 2021206687 | A1 | 08 July 2021 |
| | | | | TW | 202016040 | A | 01 May 2020 |
| | | | | JP | 2021109821 | A | 02 August 2021 |
| CN | 103351102 | A | 16 October 2013 | None | | | |
| CN | 101594987 | A | 02 December 2009 | US | 2008103036 | A1 | 01 May 2008 |
| | | | | US | 2011042129 | A1 | 24 February 2011 |
| | | | | IN | 1541KOLNP2009 | A | 29 May 2009 |
| | | | | KR | 20090079910 | A | 22 July 2009 |
| | | | | TW | 200833624 | A | 16 August 2008 |
| | | | | EP | 2076386 | A2 | 08 July 2009 |
| | | | | WO | 2008052154 | A2 | 02 May 2008 |
| | | | | CA | 2667439 | A1 | 02 May 2008 |
| | | | | RU | 2009119737 | A | 10 December 2010 |
| | | | | JP | 2010508226 | A | 18 March 2010 |
| | | | | MX | 2009004445 | A | 18 June 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102503153 A
- CN 104556710 A
- CN 103482876 A
- CN 113135666 A